# EUROPÄISCHE PATENTSCHRIFT

(11) **EP 2 544 866 B1**
(45) Veröffentlichungstag und Bekanntmachung des Hinweises auf die Patenterteilung: **02.03.2016**
(21) Anmeldenummer: 11708435.0
(22) Anmeldetag: 03.03.2011
(51) Int. Cl.: B25J 9/16

(54) **VERFAHREN ZUR MONTAGE VON BAUTEILEN MITTELS EINES INDUSTRIEROBOTERS**
METHOD FOR MOUNTING COMPONENTS BY MEANS OF AN INDUSTRIAL ROBOT
PROCÉDÉ DE MONTAGE D'ÉLÉMENTS STRUCTURAUX AU MOYEN D'UN ROBOT INDUSTRIEL

(30) Priorität: 09.03.2010 DE 102010010718
(43) Veröffentlichungstag der Anmeldung: 16.01.2013
(73) Patentinhaber: KUKA Roboter GmbH, 86165 Augsburg (DE)
(72) Erfinder: SCHREIBER, Günter, 86316 Friedberg (DE); GERUNG, Michael, 86163 Augsburg (DE)
(74) Vertreter: Patentanwälte Funk & Böss GbR
(86) Internationale Anmeldenummer: PCT/EP2011/053153
(87) Internationale Veröffentlichungsnummer: WO 2011/110463

(56) Entgegenhaltungen:
- US-A- 4 791 588
- KRAUS W JR ET AL: "Force fields in the manipulation of flexible materials", IEEE INTERNATIONAL CONFERENCE ON ROBOTICS AND AUTOMATION. PROCEEDINGS., 1996. MINNEAPOLIS, MN, USA, Bd. 3, 22. April 1996 (1996-04-22), - 28. April 1996 (1996-04-28), Seiten 2352-2357, XP010163108, IEEE, US DOI: 10.1109/ROBOT.1996.506515 ISBN: 978-0-7803-2988-1
- TATSUO GOTO, KIYOO TAKEYASU, TADAO INOYAMA: "Control Algorithm for Precision Insert Operation Robots", IEEE TRANSACTIONS ON SYSTEMS, MAN, AND CYBERNETICS, Bd. SMC 10, Nr. 1, Januar 1980 (1980-01), Seiten 19-25, XP002639804,
- KRAUS W JR ET AL: "Case studies in the manipulation of flexible parts using a hybrid position/force approach", IEEE INTERNATIONAL CONFERENCE ON ROBOTICS AND AUTOMATION. PROCEEDINGS., 1997 ALBUQUERQUE, NM, USA, Bd. 1, 20. April 1997 (1997-04-20), - 25. April 1997 (1997-04-25), Seiten 367-372, XP010235725, IEEE, NEW YORK, NY, USA DOI: 10.1109/ROBOT.1997.620065 ISBN: 978-0-7803-3612-4

## Beschreibung

Die Erfindung betrifft ein Verfahren zur Montage eines Bauteils, das einen Einführungsabschnitt und einen Halteabschnitt aufweist, in eine Öffnung eines Werkstücks mittels eines Industrieroboters, der einen Endeffektor aufweist, welcher das Bauteil an dem Halteabschnitt führt.

Die EP 1 405 690 A1 beschreibt einen Industrieroboter und ein Verfahren zur Montage eines Ventils in eine dazu bestimmte Bohrung einer Radfelge von Kraftfahrzeugen. Zur Lagerichtigen Montage des Ventils in die Bohrung ist ein Kamerasystem vorgesehen, welches die genaue Lage der Bohrung an der Radfelge bestimmt und an ein Steuersystem übermittelt, welches zur Ansteuerung des Industrieroboter mit diesem verbunden ist.

Die JP 07-088730 A beschreibt eine Montagezelle mit zwei Industrierobotern. Eine Instrumententafel eines Kraftfahrzeugs bildet ein Werkstück, das eine Öffnung aufweist, an der ein Bauteil montiert werden soll. Dazu weist die Instrumententafel Markierungen auf. Einer der beiden Industrieroboter trägt ein Kamerasystem, um die Öffnung und die Markierungen der Instrumententafel aufnehmen zu können. Aus den mittels des Kamerasystems aufgenommenen Lagen der Öffnung und der Markierungen wird eine Montageposition und Montageorientierung für das Bauteil bestimmt und der andere Industrieroboter, der das Bauteil hält, entsprechend angesteuert, um das Bauteil lagerichtig bezüglich des Werkstücks zu seiner Montage zu positionieren.

Die JP 04-348885 A beschreibt ein Verfahren zum Einführen eines Bauteils in eine Öffnung eines Werkstücks, bei dem das Bauteil von einem Roboter bewegt an die Öffnung herangeführt wird. Wenn das Bauteil an einem Rand der Öffnung des Werkstücks ansteht, wird das Bauteil durch den Roboter gedreht und eine Veränderung der Kontaktkraft aufgenommen und gespeichert. Auf Grundlage der Veränderung der Kontaktkraft' wird eine Bewegungsrichtung ermittelt, in die der Roboter das Bauteil bewegt, um es lagerichtig in die Öffnung einführen zu können.

Das Dokument KRAUS W JR ET AL: "Force fields in the manipulation of flexible materials", IEEE INTERNATIONAL CONFERENCE ON ROBOTICS AND AUTOMATION. PROCEEDINGS., 1996. MINNEAPOLIS, MN, USA, Bd. 3, 22. April 1996 (1996-04-22), - 28. April 1996 (1996-04-28), Seiten 2352-2357, XP010163108, DOI: 10.1109/ROBOT.1996.506515 betrifft ein Verfahren zur Montage von elastischen Werkstücken mittels einer kraftgeregelten Bewegung des Endeffektors eines Industrieroboters. Dabei wird anhand einer Aufgabestellung zum Einschieben eines Biegeträgers in den Spalt eines Bauteils der Industrieroboter derart geregelt, dass das Bauteil angefahren wird, der Biegeträger entlang der Oberfläche des Bauteils bewegt wird, bis der Spalt des Bauteils erreicht ist und anschließend eine geregelte Kraft in Einschieberichtung ausgeübt wird und gleichzeitig in senkrechter Richtung mit einer konstanten Geschwindigkeit heruntergefahren wird. Die geregelte Kraft in Einschieberichtung wird dabei auf einen Wert gehalten, bei dem eine Deformation des Biegeträgers erhalten bleibt und somit den Kontakt vom Biegeträger zum Bauteil beibehalten wird. Nachdem die Kraft des deformierten Biegeträger die Haftung des Biegeträger am Spaltrand überwindet und den Biegeträger in den Spalt einschiebt, wird der Industrieroboter derart geregelt, dass der Biegeträger in den Spalt des Bauteils in Einschieberichtung bewegt wird und die Querkräfte bezüglich der Einschieberichtung zu null werden.

Aufgabe der Erfindung ist es, ein verbessertes Verfahren zur Montage eines Bauteils in eine Öffnung eines Werkstücks anzugeben.

Die Aufgabe der Erfindung wird gelöst durch ein Verfahren zur Montage eines Bauteils, das einen Einführungsabschnitt und einen Halteabschnitt aufweist, in eine Öffnung eines Werkstücks mittels eines Industrieroboters, der einen Endeffektor aufweist, welcher das Bauteil an dem Halteabschnitt führt, mit den Schritten:
- Annähern des Einführungsabschnitts des Bauteils an die Öffnung durch Bewegen des Industrieroboters;
- Erhöhen von Prozesskräften mittels des Industrieroboters nach einem Kontakt des Einführungsabschnitts des Bauteils mit dem Werkstück bis zum Erreichen einer Prozesskraftschwelle, wobei die Prozesskräfteinsbesondere in Form von Materialspannungen gespeichert werden;
- Erhöhen der Nachgiebigkeit des Industrieroboters bei Erreichen der Prozesskraftschwelle; und
- Ausführen einer passiven Zentrierbewegung des Industrieroboters aufgrund der durch eine Materialentspannung frei werdenden Prozesskräfte.

Das Bauteil kann insbesondere ein gummielastisches Bauteil sein. Das Bauteil kann beispielsweise Elastomere, Gummis d.h. vulkanisierter Naturkautschuk, Kautschuk und/oder Silikonkautschuk aufweisen. Daneben kann das Bauteil auch andere Materialen aufweisen, wie beispielsweise Metalle, die in gewissem Umfang auch über elastische Eigenschaften verfügen. Weist das Bauteil selbst, also inhärent, elastische Eigenschaften auf, so können die Prozesskräfte in Form von Materialspannungen in dem Bauteil gespeichert werden. Alternativ oder ergänzend können die Prozesskräfte in Form von Materialspannungen auch in federelastischen Gliedern und/oder einem federelastischen Endeffektor des Industrieroboters gespeichert und/oder durch einen Kraft- bzw. Momentengeregelten Betrieb des Industrieroboters nachgebildet werden.

Als Prozesskräfte werden insbesondere diejenigen Kontaktkräfte verstanden, die sich zwischen dem Bauteil und dem Werkstück aufbauen, wenn der Industrieroboter das Bauteil mit dem Werkstück in Berührung bringt.

Die Prozesskraftschwelle stellt eine Höchstkraft dar, bei deren Erreichung ein Maß an Prozesskräften insbesondere in Form von Materialspannungen in dem elastischen Bauteil, in dem federelastischen Glied und/oder dem federelastischen Endeffektor des Industrieroboters gespeichert und/oder durch einen Kraft- bzw. Momenten-geregelten Betrieb des Industrieroboters nachgebildet ist, welches Maß an Prozesskräften ausreichend ist, um den Industrieroboter bei Erhöhen seiner Nachgiebigkeit eine passive Zentrierbewegung ausführen zu lassen.

Eine Nachgiebigkeit d.h. Nachgiebigkeitsregelung des Industrieroboters kann insbesondere mittels einer Impedanzregelung statt einer Admittanzregelung erreicht werden.

Eine Admittanzregelung basiert auf einer vorhandenen Positionsregelung des Industrieroboters auf Gelenkebene. Hier müssen die von außen auf den Industrieroboter einwirkenden verallgemeinerten Kräften gemessen werden. Ausgehend von diesen Kräften wird eine, dem gewünschten dynamischen Verhalten entsprechende, Bewegung des Industrieroboters bestimmt, die über eine inverse Kinematik und die unterlagerte Positionsregelung an den Industrieroboter kommandiert wird.

Eine Impedanzregelung basiert im Gegensatz zur Admittanzregelung auf einer vorhandenen Drehmomentenregelung auf Gelenkebene. Es werden die Abweichung der tatsächlichen Lage von einer definierten Solllage gemessen und entsprechend des gewünschten dynamischen Verhaltens eine gewünschte verallgemeinerte Kraft, bzw. Kräfte und Momente, bestimmt. Diese Kraft kann über die bekannte Kinematik des Industrieroboters auf entsprechende Gelenkdrehmomente abgebildet werden. Die Drehmomente können schließlich über die unterlagerte Drehmomentenregelung eingestellt werden.

Die Erzielung eines gewünschten kartesischen Verhaltens kann basierend auf einer unterlagerten Positions-, Drehmomenten- oder Gelenk-Impedanzregelung erfolgen. Die Realisierung dieser Regelungen können durch die Integration von Momentensensorik in die Gelenke eines Industrieroboters erreicht werden. Der Sensor erfasst dabei das am Abtrieb eines Getriebes wirkende eindimensionale Drehmoment. Diese Größe kann für die Regelung als Messgröße herangezogen werden und ermöglicht somit die Berücksichtigung der Elastizität der Gelenke im Rahmen der Regelung. Insbesondere werden durch eine Drehmomentsensorik, im Gegensatz zur Verwendung eines Kraftmomentensensors am Endeffektor, auch diejenigen Kräfte gemessen, die nicht auf den Endeffektor, sondern auf die Glieder des Industrieroboters und/oder auf ein von dem Industrieroboter gehaltenes Bauteil ausgeübt werden.

Mit dem Merkmal einer Erhöhung der Nachgiebigkeit kann mit anderen Worten eine Erhöhung der Affinität des Industrieroboters verstanden werden, Störkräfte, die von außen auf ihn einwirken, zu verringern oder zu null werden zu lassen.

Mit dem Begriff einer passiven Zentrierbewegung kann jede Bewegung verstanden werden, die der Industrieroboter aufgrund eines Einwirkens einer äußeren Kraft ausführt, ohne dass die Gelenke des Industrieroboters zu seiner aktiven Bewegung angetrieben werden.

Die Öffnung kann insbesondere eine durchgehende Bohrung, eine Sackbohrung in dem Werkstück oder eine Ausstanzung aus dem Werkstück sein. Die Öffnung kann eine Kreisform aufweisen. Die Öffnung kann jedoch auch andere Konturen aufweisen. Die Öffnung kann insbesondere eine ganz allgemeine Kontur, insbesondere eine konkave Kontur aufweisen. So kann beispielsweise die Kontur der Öffnung statt kreisförmig insbesondere eine ovale oder elliptische Form aufweisen.

Ein Erhöhen der Nachgiebigkeit des Industrieroboters kann durch eine sprunghafte Änderung der Nachgiebigkeit erfolgen. Einer Erhöhung der Nachgiebigkeit kann also in einem sehr kurzen Zeitintervall erfolgen, so dass die passive Bewegung des Industrieroboters mit annehmbar hohen Beschleunigungen stattfinden kann. So werden, beispielsweise aufgrund von Reibungseffekten, Energieverluste vermindert, so dass diese frei werdenden Energien für das passive Bewegen des Industrieroboters zur Verfügung stehen.

Die sprunghafte Änderung der Nachgiebigkeit kann von einem Anfangsnachgiebigkeitswert zu einem Endnachgiebigkeitswert innerhalb eines Zeitfensters zwischen 100 Mikrosekunden und 12 Millisekunde erfolgen. Besonders vorteilhaft hat sich ein Zeitfenster von 1 Millisekunde herausgestellt.

In allen erfindungsgemäßen Ausgestaltungen kann ein Erhöhen der Nachgiebigkeit des Industrieroboters durch sprunghafte Änderung eines Regelparameters, insbesondere Nullsetzen eines Verstärkungsfaktors, des zum Erhöhen der Prozesskräfte wirkenden Regelkreises erreicht werden.

Des Weiteren kann ein Erhöhen der Nachgiebigkeit des Industrieroboters auch durch ein Umschalten des Industrieroboters von einem positionsgeregelten Betrieb in einen kraft- und/oder momentengeregelten Betrieb erfolgen. Mit anderen Worten kann eine Änderung des Regelgesetzes bzw. der Robotereigenschaften erfolgen und zwar von einer Admittanzregelung in eine Impedanzregelung. Dieses Umschalten kann insbesondere schlagartig d.h. möglichst schnell erfolgen.

Erfindungsgemäß können die Prozesskräfte in Form von Materialspannungen in dem Bauteil gespeichert werden. Alternativ oder ergänzend können die Prozesskräfte in Form von Materialspannungen in dem Werkstück gespeichert wird. Die Prozesskräfte können, alternativ oder ergänzend, auch in Form von Materialspannungen in einem federelastischen Glied und/oder einem federelastischen Endeffektor des Industrieroboters gespeichert wird. Statt einer tatsächlichen Speicherung in einem federelastischen Glied und/oder einem federelastischen Endeffektor des Industrieroboters kann eine Federsteifigkeit des Industrieroboters auch durch einen kraft- und/oder momentengeregelten Betrieb des Industrieroboters nachgebildet werden.

Ein Abwandlung des erfindungsgemäßen Verfahrens sieht ein Wiederholen der Schritte eines der beschriebenen Verfahren vor, wenn die Ist-Position des Bauteils bezüglich der Öffnung des Werkstücks von einer Soll-Position des Bauteils bezüglich der Öffnung des Werkstücks um mehr als einen vorgegebenen Toleranzwert abweicht. Mit anderen Worten wird das erfindungsgemäße Verfahren gegebenenfalls so oft wiederholt, bis das Bauteil in die Öffnung des Werkstücks eingefügt werden kann. D.h. es wird gegebenenfalls zwischen einem positionsgeregelten Betrieb und einem kraft- bzw. momentengeregelten Betrieb mehrmals hin und her geschalten.

In allen erfindungsgemäßen Ausführungsformen kann zumindest der Einführungsabschnitt des Bauteils im Querschnitt kreisförmig ausgebildet sein, die Öffnung eine Kreisöffnung sein, so dass die passive Zentrierbewegung des Industrieroboters genau in Richtung des Zentrums ausgeführt wird.

Somit stellt je nach Ausführungsform die Erfindung ein Verfahren bereit, mit dem ein Bauteil in eine Öffnung eines Werkstücks eingefügt werden kann, ohne dass aufwändige Sensorik zur Bestimmung und/oder Vermessung der Lage der Öffnung benötigt wird. Auch bedarf es keiner speziellen Programmierung der Steuerungsvorrichtung des Industrieroboters zur aktiven Nachverfolgung der Lage der Öffnung des Werkstücks.

In einem beispielhaften Anwendungsfall aus der Kraftfahrzeugfertigung geht es um Gummiformteile, wie beispielsweise Stopfen, die in eine noch unbehandelte Karosserie eines Kraftfahrzeugs automatisiert eingebracht werden sollen, um die Karosserie mit verschlossenen Hohlräumen lackieren zu können. Vor allem auf der Unterseite der Karosserie stellt diese Montageaufgabe eine Tätigkeit dar, die bisher manuell schwierig durchführbar ist und deshalb unter Einsatz eines Industrieroboters automatisiert werden kann.

Bei dem erfindungsgemäßen Verfahren geht es insbesondere um eine spezielle Strategie, die Mittel einer Öffnung, insbesondere den Lochmittelpunkt einer kreisförmigen Öffnung zu finden.

Beim Fügen besteht ein Problem darin, dass aufgrund von Bauteiltoleranzen des Werkstücks, wie beispielsweise einer Rohkarosserie und Zuführeinheiten am Produktionsband, die Einfügeposition nicht exakt bekannt ist. Daher muss bisher der Industrieroboter eine Suchfahrt durchführen, um das vom idealisierten Modell bekannte Loch exakt zu bestimmen. Danach startet erst der eigentliche Fügevorgang. Eine solche Suchfahrt kostet Zeit, d.h. Taktzeit. Die Erfindung zielt darauf ab, zumindest für eine bestimmte Klasse von technisch relevanten Bauteilen die Suchzeit zu minimieren. Insbesondere sollen die Eigenschaften der Bauteile, die eine eigene Federsteifigkeit haben, wie z.B. Gummi, geschickt genutzt werden.

So genannte Leichtbauroboter verfügen über verschiedene Regelungsbetriebsarten. Diese werden im Fügevorgang genutzt. Der Roboter fährt beispielsweise in einer Suchphase mit gegriffenen Bauteil auf das ideal bekannte Loch, bis er einen Andruck spürt. Während dieser Suchfahrt ist der Roboter selbst steif geschaltet, d.h. er wird positionsgeregelt betrieben. Sobald der Roboter eine Gegenkraft spürt, wird der Roboter selbst schlagartig weich geschaltet, d.h. er wird kraft-/ momentengeregelt betrieben. Bei dem Leichtbauroboter des Typs KUKA LBR III kann dies mittels des Befehls "TRIG BY CONTACT" ausgelöst werden.

Im Augenblick des Umschaltes von positionsgeregelten Betrieb in kraft-/ momentengeregelten Betrieb drückt das Bauteil aufgrund seiner eigenen Federsteifigkeit den Roboter weg, da sich die Feder des Bauteils entspannt. Dabei kann die Federsteifigkeit des Roboters geeignet klein gewählt werden.

Ein Wegdrücken durch das Bauteil geschieht jedoch bei Öffnungen bzw. konkaven Konturen wie beispielsweise kreisförmige Bohrungen stets in Richtung Zentrum bzw. Kreismittelpunkt. Damit steht nach dem Wegdrücken der Roboter an einer günstigeren Einfügeposition, um das Bauteil mit minimiertem Aufwand einfügen zu können.

Erfindungsgemäß ist daher ein insbesondere schlagartiges Umschalten der Steifigkeiten vorgesehen, sobald eine Gegenkraft aus dem Fügevorgang an den Robotergelenken oder am Endeffektor spürbar ist. Das Bauteil selbst wird dabei als Feder und Energiespeicher genutzt, um den Fügevorgang zu unterstützen.

Ein zielgenaues Einfügen von Bauteilen in Öffnungen von Werkstücken kann somit unter Ausnutzung von Elastizitäten erfolgen und zwar von Elastizitäten, die in Form von Materialeigenschaften der Umgebung, Materialeigenschaften des zu fügenden Bauteils, Robotereigenschaften, wie Drehmomentsensoren, Endeffektoreigenschaften vorliegen und/oder in Form eines Regelgesetzes virtuell in der Steuerung auftreten.

Ein erfindungsgemäßer Aspekt ist dabei das sprunghafte bzw. schlagartige Ändern der Robotereigenschaften bzw. des Regelgesetzes, wobei die in den Elastizitäten gespeicherten Energien frei werden. Die freiwerdenden Energien bewirken Prozesskräfte, die positiv in Hinsicht auf Prozessstabilität und Reduktion der Taktzeit ausgenutzt werden können. Im Allgemeinen wirkt die Rückstellkraft, vor allem bei kreisförmigen Bauteilen und/oder Öffnungen oder zumindest konvexe Bauteile und/oder konkave Öffnungen in die richtige Richtung d.h. zum Zentrum hin, um das zu fügende Bauteil korrekt auszurichten.

Das Wegdrücken durch das Bauteil geschieht somit immer in Richtung Kreismittelpunkt. Damit steht der Roboter anschließend an einer günstigen Einfügeposition, um das Bauteil mit minimaler Suchzeit einzufügen.

Bei geeigneter Wahl der Steifigkeitsparameter des Roboters kann die Rückstellkraftkomponente somit passiv genutzt werden, um den Suchvorgang deutlich zu beschleunigen. Der genutzte Effekt basiert, wie bereits beschrieben, auf die im Material gespeicherten federartigen Spannungen. Der Roboter selbst stellt außerdem eine programmierbare d.h. virtuelle Feder dar, die schlagartig entspannt werden kann. Während des Entspannungsvorgangs wird der Roboter durch das Bauteil selbst in eine vorteilhafte Position gedrückt.

Das Verfahren ist nicht auf das Setzen von Stopfen im Karosserierohbau beschränkt, sonder lässt sich auf alle Formteile ausweiten, die eine eigene signifikante Federkonstante d.h. Materialsteifigkeit besitzen. Die Lochform der Öffnung am Werkstück, beispielsweise als Kreis oder Ellipse unterstützt den Effekt vorteilhaft, ist jedoch auch nicht allein beschränkend, d.h. auch andere Klassen von Formen sind mit dem Verfahren behandelbar.

Im Prinzip werden die vorhandenen d:h. echten Elastizitäten der Umgebung und des Roboters und die virtuellen Elastizitäten als Energiespeicher genutzt. Dazu wird der Roboter selbst zu Anfang steif geschalten. Dies kann in Form einer beschriebenen Positionsregelung geschehen. Dann wird mit dem Roboter auf Andruck gefahren, d.h. das Bauteil wird mit der Öffnung am Werkstück in Kontakt gebracht und die vorhandenen Feder-Energiespeicher werden geladen. Ein Roboterkommando, wie beispielsweise der Befehl "TRIG BY CONTACT" des Leichtbauroboters des Typs KUKA LBR III sorgt dann dafür, das bei Überschreitung einer Kraftschwelle der Roboter schlagartig weich geschalten werden kann. Die im Gesamtsystem vorhandene, insbesondere potentielle Energie kann damit schlagartig freigesetzt werden.

Bei allen derartigen Fügevorgängen und Montageprozessen kann die frei werdende Kraft eine den Prozess unterstützende Richtung, wie am obigen Beispiel von kreisförmigen Objekten aufgezeigt. Im Allgemeinen genügt ein einmaliger Durchlauf einer solchen Abfolge. Der Durchlauf kann jedoch bei Bedarf wiederholt werden.

Der Energiespeichereffekt kann jedoch auch durch ein passives Federelement im Endeffektor, z.B. im Greifer oder als Zwischenstück zwischen Flansch und Greifer, realisiert werden. Derselbe programmatische Ablauf, wie oben beschrieben kann in einer solchen Ausführung realisiert werden.

Beim Fügen von steifen Bauteilen, wie beispielsweise Metallbolzen in Metallloch, kann die benötigte Federsteifigkeit auch aus dem Roboter selbst kommen, d.h. mittels mechanischer Verspannung der Roboterglieder, oder die benötigte Federsteifigkeit kann sogar virtuell erzeugt werden, sofern die Umgebungssteifigkeit nicht ausreicht.

Ein erfindungsgemäßes Verfahren ist exemplarisch mit den beigefügten Figuren erläutert. Es zeigen:
- Fig. 1: einen Industrieroboter mit Endeffektor während eines Montagevorgangs; und
- Fig. 2: ein Ablaufdiagramm als Beispiel eines erfindungsgemäßen Verfahrens.

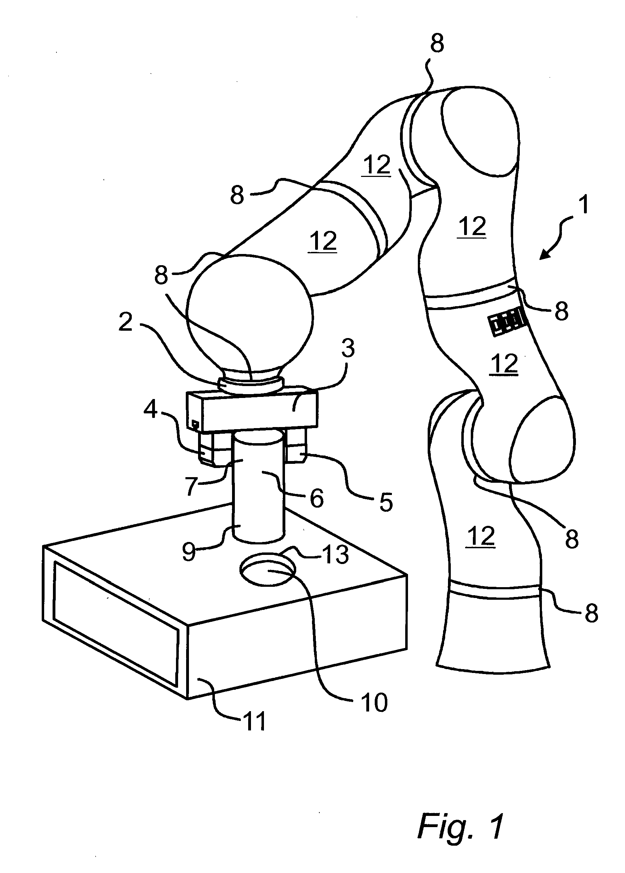

In der Fig. 1 ist ein Industrieroboter 1 dargestellt. Beispielhaft handelt es sich in dem dargestellten erfindungsgemäßen Ausführungsbeispiel um einen Leichtbauroboter des Typs KUKA LBR III. Der Industrieroboter 1 weist an seinem Handflansch 2 einen Endeffektor 3 auf. Der Endeffektor 3 kann auch als Greifer bezeichnet werden. Der dargestellte Endeffektor 3 weist zwei gegeneinander bewegliche Greiferbacken 4 und 5 auf. Zwischen den Greiferbacken 4 und 5 ist ein Bauteil 6 an einem Halteabschnitt 7 des Bauteils gehalten. Der Industrieroboter 1 weist Glieder 12 auf, die durch Gelenke 8 miteinander verbunden sind. Durch Bewegen der Gelenke 8 des Industrieroboters 1 wird der Endeffektor 3 und das Bauteil 6 bewegt. Das Bauteil 6 weist neben dem Halteabschnitt 7 einen Einführungsabschnitt 9 auf. Mittels des erfindungsgemäßen Verfahrens soll der Einführungsabschnitt 9 des Bauteils 6 in eine Öffnung 10 eines Werkstücks 11 mittels des Industrieroboters 1 eingefügt werden.

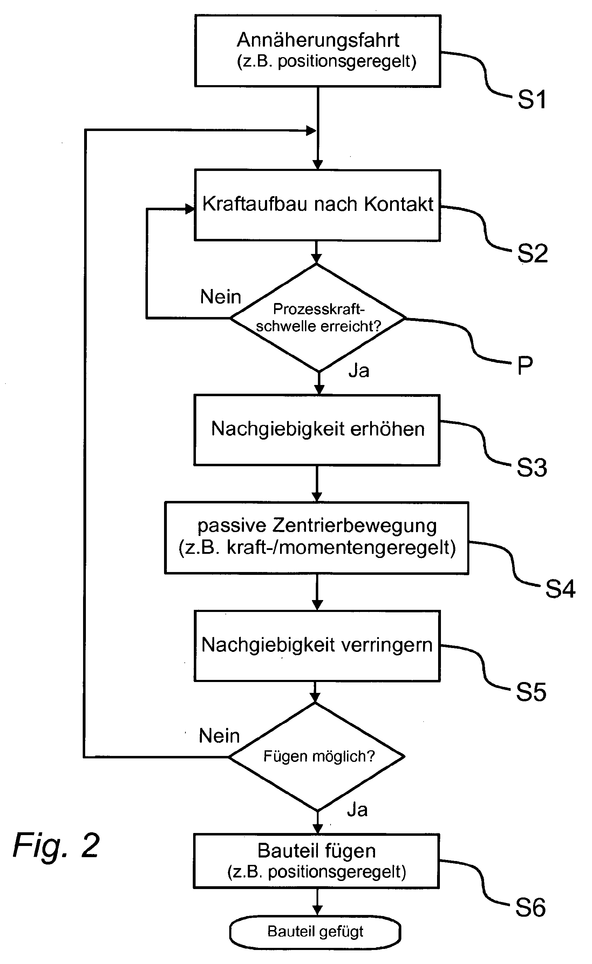

In der Fig. 2 ist eine Ausführungsform eines erfindungsgemäßen Verfahrens schematisch dargestellt. In einem ersten Schritt S1 einer Annäherungsfahrt erfolgt ein Annähern des Einführungsabschnitts 9 des Bauteils 6 an die Öffnung 10 durch Bewegen des Industrieroboters 1. Das Annähern kann in einem positionsgeregelten Betrieb des Industrieroboters 1 erfolgen.

Dann erfolgt in einem zweiten Schritt S2 nach Kontakt des Bauteils 6 bzw. des Einführungsabschnitts 9 mit dem Werkstück 11 bzw. einem Rand 13 der Öffnung 10 ein Erhöhen von Prozesskräften mittels des Industrieroboters 1 nach dem Kontakt des Einführungsabschnitts 9 des Bauteils 6 mit dem Werkstück 11 bis zum Erreichen einer Prozesskraftschwelle P, Dabei werden die Prozesskräfte insbesondere in Form von Materialspannungen in dem Bauteil 6, dem Endeffektor 3 und/oder dem Industrieroboter 1 gespeichert.

Anschließend erfolgt bei Erreichen der Prozesskraftschwelle, bzw. nach Überschreiten der Prozesskraftschwelle P, in einem dritten Schritt S3 ein Erhöhen der Nachgiebigkeit des Industrieroboters 1. Die Erhöhung der Nachgiebigkeit des Industrieroboters 1 kann durch eine sprunghafte Änderung der Nachgiebigkeit erfolgen. Die Änderung der Nachgiebigkeit kann ein Umschalten von einem positionsgeregelten Betrieb in einen kraft-/momentengeregelten Betrieb des Industrieroboters 1 sein.

Nach dem Erhöhung der Nachgiebigkeit des Industrieroboters 1 bzw. dem Umschalten des Industrieroboters 1 von einem positionsgeregelten Betrieb in einen kraft-/momentengeregelten Betrieb führt der Industrieroboter 1 in einem vierten Schritt S4 eine passive Zentrierbewegung aufgrund der durch eine Materialentspannung frei werdenden Prozesskräfte aus. D.h. der Industrieroboter 1 wird nicht mittels Ansteuern von Antrieben der Gelenke 8 aktiv bewegt, sondern der Industrieroboter 1 wird durch die aufgrund der durch eine Materialentspannung frei werdenden Prozesskräfte d.h. insbesondere durch äußere Kräfte, die auf die Struktur des Industrieroboters 1 einwirken, passiv weggedrückt. In einer Variation der Erfindung erfolgt eine passive Zentrierbewegung durch ein Entspannen von Materialentspannungen der Roboterstruktur, also aufgrund innerer Kräfte des Industrieroboters 1 und/oder aufgrund einer Federsteifigkeit des Industrieroboters 1, die durch einen kraft- und/oder momentengeregelten Betrieb des Industrieroboters 1 nachgebildet ist.

In einem optionalen weiteren Schritt S5 kann nach der Zentrierung des Bauteils 6 bezüglich der Öffnung 10 des Werkstücks 11 die Nachgiebigkeit des Industrieroboters 1 wieder verringert werden bzw. von einem kraft- und/oder momentengeregelten Betrieb des Industrieroboters 1 wieder in einen positionsgeregelten Betrieb zurück geschalten werden. Ist in einem Schritt S6 ein Fügen des Einführungsabschnitts 9 des Bauteils 6 in die Öffnung 10 möglich, so wird das Bauteil 6 fertig montiert und der Montagevorgang ist beendet.

Ist ein Fügen des Einführungsabschnitts 9 des Bauteils 6 in die Öffnung 10 noch nicht möglich, so können die Schritte S2 bis S5 gemäß einer der Ausführungsformen der erfindungsgemäßen Verfahren einmal oder gegebenenfalls mehrmals wiederholt und/oder variiert werden.

Ein Wiederholen der Schritte S2 bis S5 des Verfahrens kann insbesondere dann durchgeführt werden, wenn die Ist-Position des Bauteils 6 bezüglich der Öffnung 10 des Werkstücks 11 von einer Soll-Position des Bauteils 6 bezüglich der Öffnung 10 des Werkstücks 11 um mehr als einen vorgegebenen Toleranzwert abweicht.

Zumindest der Einführungsabschnitt 9 des Bauteils 6 kann im Querschnitt kreisförmig ausgebildet sein, bzw. die Öffnung 10 kann eine Kreisöffnung sein, so däss die passive Zentrierbewegung des Industrieroboters 1 genau in Richtung des Zentrums ausgeführt wird.

## Patentansprüche

1. Verfahren zur Montage eines Bauteils (6), das einen Einführungsabschnitt (9) und einen Halteabschnitt (7) aufweist, in eine Öffnung (10) eines Werkstücks (11) mittels eines Industrieroboters (1), der einen Endeffektor (3) aufweist, welcher das Bauteil (6) an dem Halteabschnitt (7) führt, mit den folgenden Schritten:
- Annähern (S1) des Einführungsabschnitts (9) des Bauteils (6) an die Öffnung (10) durch Bewegen des Industrieroboters (1);
- Erhöhen von Prozesskräften (S2) mittels des Industrieroboters (1) nach einem Kontakt des Einführungsabschnitts (9) des Bauteils (6) mit dem Werkstück (11) bis zum Erreichen einer Prozesskraftschwelle (P), wobei die Prozesskräfte insbesondere in Form von Materialspannungen gespeichert werden;
**gekennzeichnet durch** die Schritten:
- Erhöhen der Nachgiebigkeit (S3) des Industrieroboters (1) bei Erreichen der Prozesskraftschwelle (P); und
- Ausführen einer passiven Zentrierbewegung (S4) des Industrieroboters (1) aufgrund der **durch** eine Materialentspannung frei werdenden Prozesskräfte.

2. Verfahren nach Anspruch 1, bei dem ein Erhöhen der Nachgiebigkeit (S3) des Industrieroboters (1) durch eine sprunghafte Änderung der Nachgiebigkeit erfolgt.

3. Verfahren nach Anspruch 2, bei dem die sprunghafte Änderung der Nachgiebigkeit von einem Anfangsnachgiebigkeitswert zu einem Endnachgiebigkeitswert innerhalb eines Zeitfensters zwischen 100 Mikrosekunden und 12 Millisekunde erfolgt, insbesondere von 1 Millisekunde.

4. Verfahren nach einem der Ansprüche 1 bis 3, bei dem ein Erhöhen der Nachgiebigkeit (S3) des Industrieroboters (1) durch sprunghafte Änderung eines Regelparameters, insbesondere Nullsetzen eines Verstärkungsfaktors, des zum Erhöhen der Prozesskräfte wirkenden Regelkreises erfolgt.

5. Verfahren nach einem der Ansprüche 1 bis 4, bei dem ein Erhöhen der Nachgiebigkeit (S3) des Industrieroboters (1) durch ein Umschalten des Industrieroboters (1) von einem positionsgeregelten Betrieb in einen kraft- und/oder momentengeregelten Betrieb erfolgt.

6. Verfahren nach einem der Ansprüche 1 bis 5, bei dem die Prozesskräfte in Form von Materialspannungen in dem Bauteil (6) und/oder Werkstück (11) gespeichert wird.

7. Verfahren nach einem der Ansprüche 1 bis 6, bei dem die Prozesskräfte in Form von Materialspannungen in einem federelastischen Glied (12) des Industrieroboters (1) gespeichert werden.

8. Verfahren nach einem der Ansprüche 1 bis 7, bei dem die Prozesskräfte in Form von Materialspannungen in einem federelastischen Glied (12) und/oder einem federelastischen Endeffektor (3) des Industrieroboters (1) gespeichert wird.

9. Verfahren nach einem der Ansprüche 1 bis 8, bei dem die Prozesskräfte dadurch gespeichert werden, dass eine Federsteifigkeit des Industrieroboters (1) durch einen kraft- und/oder momentengeregelten Betrieb des Industrieroboters (1) nachgebildet wird.

10. Verfahren nach einem der Ansprüche 1 bis 9, aufweisend den weiteren Schritt:
- Wiederholen der Schritte des Verfahrens nach einem der Ansprüche 1 bis 8, wenn die Ist-Position des Bauteils (6) bezüglich der Öffnung (10) des Werkstücks (11) von einer Soll-Position des Bauteils (6) bezüglich der Öffnung (10) des Werkstücks (11) um mehr als einen vorgegebenen Toleranzwert abweicht.

11. Verfahren nach einem der Ansprüche 1 bis 10, bei dem zumindest der Einführungsabschnitt (9) des Bauteils (6) im Querschnitt kreisförmig ausgebildet, die Öffnung (10) eine Kreisöffnung ist, so dass die passive Zentrierbewegung des Industrieroboters (1) in Richtung des Zentrums ausgeführt wird.

## Claims

1. Method for mounting a component (6), which comprises an insertion part (9) and a holding part (7), into an opening (10) in a workpiece (11) by means of an industrial robot (1) which comprises an end effector (3) which guides the component (6) on the holding part (7), comprising the following steps:
- moving (S1) the insertion part (9) of the component (6) up to the opening (10) by moving the industrial robot (1);
- increasing process forces (S2) by means of the industrial robot (1) once the insertion part (9) of the component (6) has made contact with the workpiece (11) until a process force threshold (P) is reached, wherein the process forces are stored in particular in the form of material stresses;
**characterised by** the steps of
- increasing the flexibility (S3) of the industrial robot (1) when the process force threshold (P) is reached; and
- performing a passive centring movement (S4) of the industrial robot (1) based upon the process forces released by a relaxation of the material.

2. Method according to claim 1, in which the flexibility (S3) of the industrial robot (1) is increased by a rapid change in flexibility.

3. Method according to claim 2, in which the rapid change in flexibility from an initial flexibility level to a final flexibility level takes place within a time window of between 100 microseconds and 12 milliseconds, particularly 1 millisecond.

4. Method according to any one of claims 1 to 3, in which the flexibility (S3) of the industrial robot (1) is increased by a rapid change in a control parameter of the control circuit, in particular setting a multiplication factor to zero, which is acting to increase the process forces.

5. Method according to any one of claims 1 to 4, in which the flexibility (S3) of the industrial robot (1) is increased by switching the industrial robot (1) from a position-controlled operation to a force and/or momentum-controlled operation.

6. Method according to any one of claims 1 to 5, in which the process forces are stored in the form of material stresses in the component (6) and/or in the workpiece (11).

7. Method according to any one of claims 1 to 6, in which the process forces are stored in the form of material stresses in a spring-elastic element (12) of the industrial robot (1).

8. Method according to any one of claims 1 to 7, in which the process forces are stored in the form of material stresses in a spring-elastic element (12) and/or in a spring-elastic end effector (3) of the industrial robot (1).

9. Method according to any one of claims 1 to 8, in which the process forces are stored by a reproduction of a spring stiffness of the industrial robot (1) by a force- and/or momentum-controlled operation of the industrial robot (1).

10. Method according to any one of claims 1 to 9, comprising the additional step of:
- repeating the steps of the method according to any one of claims 1 to 8 when the actual position of the component (6) with respect to the opening (10) in the workpiece (11) deviates from a target position of the component (6) with respect to the opening (10) in the workpiece (11) by more than a predefined tolerance value.

11. Method according to any one of claims 1 to 10, in which at least the insertion part (9) of the component (6) is designed to be circular in cross-section and the opening (10) is a circular opening, so that the passive centring movement of the industrial robot (1) is executed in the direction of the centre.

## Revendications

1. Procédé de montage d'un élément structurel (6) qui présente un tronçon d'introduction (9) et un tronçon de retenue (7), dans une ouverture (10) d'une pièce à usiner (11) au moyen d'un robot industriel (1) qui présente un effecteur d'extrémité (3) qui guide l'élément structurel (6) sur le tronçon de retenue (7), avec les étapes suivantes :
- approche (S1) du tronçon d'introduction (9) de l'élément structurel (6) vers l'ouverture (10) par déplacement du robot industriel (1) ;
- augmentation de forces de processus (S2) au moyen du robot industriel (1) après un contact du tronçon d'introduction (9) de l'élément structurel (6) avec la pièce à usiner (11) jusqu'à ce qu'un seuil de force de processus (P) soit atteint, les forces de processus étant mémorisées en particulier sous forme de tensions de matériau ;
**caractérisé par** les étapes suivantes :
- augmentation de la souplesse (S3) du robot industriel (1) lorsque le seuil de force de processus (P) est atteint ; et
- exécution d'un mouvement de centrage (S4) passif du robot industriel (1) sur la base des forces de processus libérées par une détente de matériau.

2. Procédé selon la revendication 1, dans lequel une augmentation de la souplesse (S3) du robot industriel (1) est produite par une modification brusque de la souplesse.

3. Procédé selon la revendication 2, dans lequel la modification brusque de la souplesse (S3) du robot industriel (1) est produite depuis une valeur de souplesse initiale jusqu'à une valeur de souplesse terminale à l'intérieur d'une fenêtre temporelle entre 100 microsecondes et 12 millisecondes, en particulier de 1 milliseconde.

4. Procédé selon l'une des revendications 1 à 3, dans lequel une augmentation de la souplesse (S3) du robot industriel (1) est produite par une modification brusque d'un paramètre de régulation, en particulier par la remise à zéro d'un facteur d'amplification du circuit de régulation agissant pour augmenter les forces de processus.

5. Procédé selon l'une des revendications 1 à 4, dans lequel une augmentation de la souplesse (S3) du robot industriel (1) est produite par une commutation du robot industriel (1) depuis un fonctionnement à position régulée à un fonctionnement à force régulée et/ou à couple régulé.

6. Procédé selon l'une des revendications 1 à 5, dans lequel les forces de processus sont mémorisées sous formes de tensions de matériau dans l'élément structurel (6) et/ou dans la pièce à usiner (11).

7. Procédé selon l'une des revendications 1 à 6, dans lequel les forces de processus sont mémorisées sous forme de tensions de matériau dans un organe (12) élastique du robot industriel (1).

8. Procédé selon l'une des revendications 1 à 7, dans lequel les forces de processus sont mémorisées sous forme de tensions de matériau dans un organe (12) élastique et/ou dans un effecteur d'extrémité (3) du robot industriel (1).

9. Procédé selon l'une des revendications 1 à 8, dans lequel les forces de processus sont mémorisées par le fait qu'une raideur de ressort du robot industriel (1) est reproduite par un fonctionnement à force régulée et/ou à couple régulé du robot industriel (1).

10. Procédé selon l'une des revendications 1 à 9, présentant l'étape supplémentaire :
- répétition des étapes du procédé selon l'une des revendications 1 à 8 lorsque la position effective de l'élément structurel (6) par rapport à l'ouverture (10) de la pièce à usiner (11) diverge de plus d'une valeur de tolérance prédéterminée d'une position de consigne de l'élément structurel (6) par rapport à l'ouverture (10) de la pièce à usiner.

11. Procédé selon l'une des revendications 1 à 10, dans lequel au moins le tronçon d'introduction (9) de l'élément structurel (6) est réalisé avec une section transversale circulaire, l'ouverture (10) est une ouverture circulaire, de telle sorte que le mouvement de centrage passif du robot industriel (1) est exécuté en direction du centre.
